(19) Europäisches Patentamt
European Patent Office
Office européen des brevets

(11) Publication number: 0 137 053
B1

(12) # EUROPEAN PATENT SPECIFICATION

(45) Date of publication of patent specification: 04.03.87

(51) Int. Cl.$^4$: **C 08 G 85/00**, D 01 D 4/02, C 09 D 5/00

(21) Application number: 83108883.6

(22) Date of filing: 08.09.83

(54) **Process for cleaning metal surfaces.**

(43) Date of publication of application:
**17.04.85 Bulletin 85/16**

(45) Publication of the grant of the patent:
**04.03.87 Bulletin 87/10**

(84) Designated Contracting States:
**AT BE CH DE FR GB IT LI LU NL SE**

(56) References cited:
**US-A-2 548 718**
**US-A-3 324 039**
**US-A-3 415 889**
**US-A-3 887 529**
**US-A-4 168 989**
**US-A-4 362 570**

(73) Proprietor: **PHILLIPS PETROLEUM COMPANY**
**5th and Keeler**
**Bartlesville Oklahoma 74004 (US)**

(72) Inventor: **Reed, Jerry Olin**
**4712 SE Clearview Dr.**
**Bartlesville, OK 74006 (US)**
Inventor: **Senatore, Guy**
**5221 SE Nowata Rd.**
**Bartlesville, OK 74006 (US)**

(74) Representative: **Dost, Wolfgang, Dr.rer.nat., Dipl.-Chem. et al**
**Patent- und Rechtsanwälte Bardehle-Pagenberg-Dost-Altenburg & Partner Postfach 86 06 20**
**D-8000 München 86 (DE)**

**EP 0 137 053 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for cleaning metal surfaces containing poly(arylene sulfide) based deposits.

In the production of poly(arylene sulfide) polymers various impurities such as polymer gel and inorganic materials are present in the polymer and can deposit on the surfaces of the production equipment. Materials derived from the polymer can also be formed during processing the produced polymer, such as in synthetic fiber production. Machine parts utilized in processing the produced polymer which contain poly(arylene sulfide) and impurities and which must be cleaned for re-use include spinnerettes, dies, pack parts, and filters.

Sometimes the poly(arylene sulfide) deposits may be removed mechanically, but the job is tedious and time consuming due to the complexity of the equipment. Also, the deposits can be removed by "burn out" procedures where the metal parts containing the deposits are placed in forced air furnaces and the extreme heat applied to them. This "burn out" procedure will not work for cleaning all deposits from metal surfaces such as the specific case of poly(phenylene sulfide) based deposits. In this case, burn out will result in a metal suface which is corroded. Therefore, new processes which will readily remove the deposits without having a corrosive or other deleterious effect on processing equipment are therefore greatly desirable.

It is therefore an object of this invention to provide a process for removing deposits on metal surfaces derived from poly(arylene sulfides).

Other aspects, objects, and the several advantages of the present invention will become apparent from this specification and the claims

In accordance with the present invention, it has been discovered that deposits on metal surfaces derived from a poly(arylene sulfide) polymer can be removed by contacting the metal surfaces with at least one polyamine compound, represented by the general formula

$$R_1R_2N(CH_2)_x[\overset{\displaystyle R_3}{\overset{|}{N}}(CH_2)_x]_nNR_1R_2$$

wherein $R_1$ and $R_2$ can be hydrogen or an alkyl radical having from 1 to 10 carbon atoms; $R_3$ can be hydrogen or an alkyl radical having 1 to 6 carbon atoms; x can be 1, 2, or 3; and n can be an integer from 1 to 4, at a temperature and for a time sufficient to remove said deposits from the surface of said metal.

Examples of polyamines suitable for use in the process of this invention include:

diethylenetriamine
triethylenetetramine
tetraethylenepentamine
N,N,N',N',N"-pentamethyldiethylenetriamine
N,N,N',N',N"-pentapropyldiethylenetriamine
N,N'-dimethyldiethylenetriamine
N,N',N"-triethyldiethylenetriamine
N,N,N',N',N",N"-hexamethyltriethylenetetramine and mixtures thereof.

The term "poly(arylene sulfide) polymer" as used in this specification is intended to include polymers of the type which are prepared as described in U.S. Patent 3,354,129 and U.S. Patent 3,919,177. As disclosed in U.S. 3,354,129, these polymers can be prepared by reacting a polyhalo-substituted cyclic compound containing unsaturation between adjacent rings and an alkali metal sulfide in a polar organic compound. The resulting polymer contains the cyclic structure of the polyhalo-substituted compound coupled in repeating units through a sulfur atom. The polymers which are preferred for use in this invention, because of their frequent occurence in polymer production and processing, are those polymers having the repeating unit —R—S— where R is phenylene, biphenylene, naphthylene, biphenylene ether, or a lower alkyl-substituted derivative thereof. By "lower alkyl" is meant alkyl groups having one to six carbon atoms such as methyl, propyl, isobutyl, n-hexyl. Polymer can also be made according to a process utilizing a p-dihalobenzene and an alkali metal sulfide, an organic amide, and an alkali metal carboxylate as in U.S. Patent 3,919,177.

Suitable polyamines to be used as the cleaning agent should exhibit some solubility for the particular poly(arylene sulfide) polymer being removed. Such polyamine should preferably have a boiling point greater than about 200°C as their use at such a temperature has exhibited enhanced cleaning results.

In carrying out the process of the present invention, the metal surfaces to be cleaned are contacted with the polyamine cleaning solution in any suitable manner and heated at a temperature and for a time sufficient to effect removal of the deposits for the metal surface. Generally, the metal surfaces should be contacted with the polyamine solution at a temperature above about 200°C and preferably above about 250°C for a period of time from about 0.5 hours to about 24 hours.

The cleaned metal surfaces are then removed from the bath. Preferably they are contacted with a solvent, such as methanol, to remove any polyamine remaining on the surface of the metal. Then the metal

surfaces are contacted with water, dried, and treated with concentrated $HNO_3$ to remove any remaining contaminants on the metal surface.

Example I

Poly(phenylene sulfide) (PPS) having a melt flow between 200 and 400 as measured at 315°C/5 Kg (ASTM D—1238, Modified Procedure B) was extruded at about 300°C through a screen-pack comprised of 4 metal screens (1.56 inches (39.6 mm) diameter) 40/80/200/Dynalloy X13L mesh size (0.42/0.18/0.074 mm) placed on top of one another. After several hours extrusion, the screens containing poly(phenylene sulfide) deposits were removed and immersed in 200 milliliters of triethylenetetramine and the solution heated at about 260°C for 6 hours. The screens were removed from the hot amine solution and soaked in methanol at 25°C for 1 hour to remove the amine. The screens were then water soaked at 25°C for 1 hour, air dried and treated with concentrate $NHO_3$ for about 30 minutes at 25°C to remove any remaining deposits. Weighing the screen pack before and after cleaning revealed that about 85 weight percent of PPS-deposits were removed indicating good cleaning. Repeating the process at 200°C and 280°C gave about 52 weight percent and 99 weight percent, respectively of PPS-contaminant removal.

The process was repeated using a glycol and two hydroxy amines to determine their efficiency as a cleaner. None of the liquids tested were satisfactory in removing PPS-deposits from metals. These results along with that of a commercial cleaner are listed in Table I. The results from the triethylenetetramine cleaning are also listed for comparison.

TABLE I

| Run No. | Cleaner | Conditions °C | Hours | Results |
|---|---|---|---|---|
| Controls: | | | | |
| 1 | Triethylene Glycol | 250 | 4 | No cleaning |
| 2 | Triethanolamine | 250 | 6 | No cleaning |
| 3 | Ethanolamine | 170 | 6 | No cleaning |
| 4 | Depoxy[a] | 125 | 4 | No cleaning |
| Invention: | | | | |
| 5 | Triethylenetetramine | 200 | 6 | 52% removal |
| 6 | Triethylenetetramine | 260 | 6 | 85% removal |
| 7 | Triethylenetetramine | 280 | 2 | 99% removal |

[a] Commercial cleaner from Atomergic Chemetals Corp., Plainville, NY; 90% dimethylsulfoxide, 7% $HNO_3$, 3% stabilizers and accelerators.

Example II

Poly(phenylene sulfide) (PPS) as described in Example I was extruded at about 300°C through a filter cartridge commonly used in fiber spinning operations. This filter cartridge identified as Dynalloy X13L consisted of a 7.5 inches (190 mm) × 1.55 inches (39.4 mm) O.D. cylinder with an inner and outer stainless steel support screen (equivalent to about a 40 mesh (0.42 mm) size) and an inner fine filter stainless steel mat (46 micron filter rating). After several hours operation, the filter cartridge was removed, soaked in triethylenetetramine at 250°C for 16 hours and further cleaned by soaking them in methanol at 25°C for 1 hour. The metal surfaces were then soaked in water at 25°C for 1 hour, air dried, and treated with concentrated $HNO_3$ for about 30 minutes at 25°C. By this method, greater than 95 percent of residual PPS-deposits was removed from the cartridge filter indicating good cleaning. This example illustrates the usefulness of the instant invention in cleaning other type metal filter screen systems.

**Claims**

1. A process for removing deposits comprising poly(arylene sulfide) from metal surfaces characterized by subjecting said metal surface to treatment with at least one polyamine represented by the general formula

$$R_1R_2N(CH_2)_x[\overset{\displaystyle R_3}{\underset{|}{N}}(CH_2)_x]_nNR_1R_2$$

wherein $R_1$ and $R_2$ independently denote a hydrogen atome or an alkyl radical having from 1 to 10 carbon atoms, $R_3$ is a hydrogen atom or an alkyl radical having 1 to 6 carbon atoms, x is 1, 2, or 3, and n is an integer from 1 to 4.

2. The process of claim 1 characterized in that said treatment is carried out at a temperature above about 200°C for a time period from 0.5 to 24 hours.

3. The process of claim 2 characterized in that said temperature is above about 250°C.

4. The process of any of the preceding claims characterized in that said metal surface is further treated by contacting the resulting metal surface with a solvent, such as methanol, and then water; b) drying said metal surface; and c) contacting said metal surface with concentrated $HNO_3$.

5. The process of any of the preceding claims characterized in that said polyamine is triethylenetetramine.

6. The process of any of the proceding claims characterized in that said poly(arylene sulfide) is poly(phenylene sulfide).

**Patentansprüche**

1. Verfahren zur Entfernung von Poly(arylensulfid) enthaltenden Ablagerungen von Metalloberflächen, dadurch gekennzeichnet, daß man die Metalloberfläche der Behandlung mit mindestens einem Polyamin der allgemeinen Formel

$$R_1R_2N(CH_2)_x[\overset{\displaystyle R_3 \atop |}{N}(CH_2)_x]_nNR_1R_2$$

unterwirft, in der $R_1$ und $R_2$ unabhängig voneinander ein Wasserstoffatom oder einen Alkyl-Rest mit 1 bis 10 Kohlenstoffatomen bedeuten, $R_3$ ein Wasserstoffatom oder ein Alkyl-Rest mit 1 bis 6 Kohlenstoffatomen ist, x den Wert 1, 2 oder 3 besitzt, und n eine ganze Zahl von 1 bis 4 bedeutet.

2. Verfahren nach Anspruch 1, dadurch gekennzeichnet, daß die Behandlung bei einer Temperatur oberhalb von etwa 200°C für eine Zeitdauer von 0,5 bis 24 Stunden durchgeführt wird.

3. Verfahren nach Anspruch 2, dadurch gekennzeichnet, daß die Temperatur oberhalb von etwa 250°C liegt.

4. Verfahren nach einem der vorhergehenden Ansprüche, dadurch gekennzeichnet, daß die Metalloberfläche einer weiteren Behandlung unterworfen wird, indem man die erhaltende Metalloberfläche mit einem Lösungsmittel, wie Methanol, und dann Wasser kontaktiert; b) die Metalloberfläche trocknet; und c) die Metalloberfläche mit konzentrierter $HNO_3$ in Berührung bringt.

5. Verfahren nach einem der vorhergehenden Ansprüche, dadurch gekennzeichnet, daß das Polyamin Triethylentetramin ist.

6. Verfahren nach einem der vorhergehenden Ansprüche, dadurch gekennzeichnet, daß das Poly(arylensulfid) Poly(phenylensulfid) ist.

**Revendications**

1. Procédé pour enlever des dépôts comprenant du poly(sulfure d'arylène) de surfaces métalliques, caractérisé en ce qu'on soumet cette surface métallique à un traitement par au moins une polyamine répondant à la formule générale:

$$R_1R_2N(CH_2)_x[\overset{\displaystyle R_3 \atop |}{N}(CH_2)_x]_nNR_1R_2$$

dans laquelle $R_1$ et $R_2$ désignent indépendamment un atome d'hydrogène ou un radical alkyle en $C_1$ à $C_{10}$, $R^3$ est un atome d'hydrogène ou un radical alkyle en $C_1$ à $C_6$, x est 1, 2 ou 3 et n est un entier de 1 à 4.

2. Procédé selon la revendication 1, caractérisé en ce que ce traitement est effectué à une température supérieure à 200°C pendant une durée de 0,5 à 24 heures.

3. Procédé selon la revendication 2, caractérisé en ce que cette température est supérieure à environ 250°C.

4. Procédé selon l'une quelconque des revendications précédentes, caractérisé en ce que cette surface métallique est en outre traitée en mettant en contact la surface métallique obtenue avec un solvant tel que le méthanol. puis l'eau; b) en séchant cette surface métallique, et c) en mettant en contact cette surface métallique avec du $HNO_3$ concentré.

5. Procédé selon l'une quelconque des revendications précédentes, caractérisé en ce que cette polyamine est la triéthylènetétramine.

6. Procédé selon l'une quelconque des revendications précédentes, caractérisé en ce que ce poly(sulfure d'arylène) est le poly(sulfure de phénylène).